# EUROPEAN PATENT SPECIFICATION

(11) **EP 2 436 965 B1**
(45) Date of publication and mention of the grant of the patent: **09.09.2015**
(21) Application number: 11006182.7
(22) Date of filing: 27.07.2011
(51) Int. Cl.: F16L 37/091

(54) **Pipe connector**
Rohrverbindung
Raccord de tuyau

(30) Priority: 29.09.2010 CN 201010296449
(43) Date of publication of application: 04.04.2012
(73) Proprietor: LA CASA ANGELA HOLDING LIMITED, Tsimshatsui, Kowloon, Hongkong (CN)
(72) Inventor: Salehi-Bakhtiari, Manouchehr, Guangdong, 510335 (CN)
(74) Representative: Thum, Bernhard

(56) References cited:
- EP-A1- 0 542 003
- EP-A2- 1 036 970
- EP-B1- 1 178 255
- DE-U1-202008 006 949

## Description

### BACKGROUND OF THE INVENTION

### Field of the Invention

The invention refers to a pipe connector.

### Description of the Related Art

A pipe is one of essential facilities used in the industry, and a pipe connecting device, such as a socket, is an important device for connecting different pipes.

Nowadays, well known means of connecting pipes includes threaded connection (referring to metallic pipes) thermal welded joint (PP-R Pipe and PE pipe). Threaded connection of pipes is realized by screwing two pipes together via the internal thread of one of the pipes and the external thread of the other, and using Teflon belt for sealing, and thermal welded joint is realized by melting the joints of two pipe and connecting them together in molten state, so that the joint forms a sealed connection. However, the two above mentioned means of connection are very complex, and with bad quality of sealing, in addition, such means of connection may also bring inconvenience to the maintenance.

In order to meet different needs, improved ways of connecting pipes and the related devices are being expected. Chinese patent with publication No. CN1594954A discloses a socket for connecting a small or medium-sized gas pipe with a valve or a tap. The socket contains a tee joint and elbow on the connecting end, so as to improve the efficiency of connecting, facilitate the maintenance and change. However, this socket is only suitable for connecting a small or medium-sized gas pipe with a valve or a tap.

Chinese patent with publication No. CN1257169A disclose a socket for pipe connection. The socket comprises a first casing pipe that cases on the external wall of it, and a second casing pipe that cases on the external wall of the first casing pipe. A fastening piece, with thread on its external wall, is arranged on the wall of the second casing pipe. The second casing pipe also contains a wheel and a spring that acts on the fastening piece. The left and the right locations of the spring are in close fit with the right end of the first casing pipe and the external wall of a spacing piece respectively. The first casing pipe contains a ramp on its external wall. This invention simplifies the mounting and demounting work, but with the pressure rises, the quality of sealing of device will be affected.

Chinese patent with publication No. CN2428674Y discloses a socket for pipe connection. The socket is metallic, and also suitable for connecting with PEX pipe. The socket contains a socket body, O-shaped sealing ring, retainer, grab ring, demounting ring, and the locking cap. The O-shaped sealing ring, retainer, grab ring, movable taper sleeve, and the locking cap are arranged in sequence inside the socket body. When the PEX pipe is inserted, the pipe may go through movable taper sleeve grab ring, retainer, O-shaped sealing ring and reach the pipe stop member A. Due to the flexibility of teeth arranged on the grab ring, the teeth may grab on the pipe when the pipe enters the socket. And also due to the flexibility of O-shaped sealing ring, the O-shaped sealing ring may form a sealed connection with the pipe when the pipe passes through. Finally, the locking cap is used to fasten the socket to prevent the components from escaping.

In order to take the PEX pipe out of the socket, the demounting ring will be used to push the teeth of the grab ring grabbing on the external wall of pipe by pushing the demounting ring in the direction of pipe entry to separate the teeth from the external wall of pipe.

Chinese patent with publication No. CN201096247Y discloses a pipe fast connecting socket that comprises in sequence O-shaped sealing ring, retainer, grab ring, demounting ring and locking locking cap. A cannelure is arranged on the O-shaped sealing ring shoulder for letting liquid pass through. This design can allow average pressure of the O-shaped sealing ring acting on the O-shaped sealing ring shoulder. When the pressure increases, the sealing of the socket gets better. Therefore, the invention may improve the sealing of the socket.

EP 0 542 003 A1 shows a pipe connector according to the preamble of claim 1.

The above mentioned prior arts comprise a grab ring that is unmovable between the retainer and the locking cap, so that the teeth of the grab ring may strongly grabbing on the external wall of pipe to restrict the PEX pipe entering. Although the PEX pipe is unmovable in the socket after the PEX pipe is completed inserted into the socket, the teeth may have been strongly restricting the entry of PEX pipe as it is being inserted, which causes much difficulty of pipe insertion.

### SUMMARY OF THE INVENTION

In view of the above-described problem, it is one objective of the invention to provide a pipe connector that not only allows a flexible pipe (like PEX pipe) easy to enter, but also ensures the sealing of socket and holding of pipe connection when the pipe is injected with liquid and gets pressurized to expand, and also provide a pipe connector using the same for liquid supply.

To achieve the above objectives, in accordance with one embodiment of the invention, provided is a pipe connector comprising a socket body, comprising in the direction of pipe entry: a locking cap for preventing the components therein from escaping, a locking cap stop member arranged at the end of the socket body where the pipe enters, for preventing the locking cap from escaping; a demounting ring for unlocking the pipe; a grab ring, comprising a flange and a plurality of teeth arranged on the flange and fixed to the external wall of the pipe; a retainer, in moveable connection with the internal wall of the socket body, for stopping the grab ring from moving in the direction of pipe entry; a retainer shoulder arranged on the internal wall of the socket body for stopping the retainer from moving in the direction of pipe entry;
an 0-shaped sealing ring for forming a sealed connection with the external wall of the pipe; an O-shaped sealing ring shoulder, arranged on the internal wall of the socket body, for stopping the O-shaped sealing ring from moving in the direction of pipe entry; a pipe stop member, arranged on the internal wall of the socket body, for stopping the pipe from moving in the direction of pipe entry the arrangement of the retainer shoulder and the locking cap allows free axial movement of the grab ring and the retainer therebetween. When pipe enters the socket, the flange of the grab ring is deflectable; when liquid is directed into the pipe and the pipe is pressurized, the 0-shaped sealing ring is compressable and axially expandable, then the 0-shaped sealing ring pushes the retainer, so as to push the grab ring to move in reverse direction of pipe entry which forces said flange to recover from deflection, thus locking the pipe.

In a class of this embodiment, the socket comprises an O-shaped sealing ring segment arranged between the O-shaped sealing ring shoulder and retainer shoulder.

In a class of this embodiment, a step in sealed movable connection with the 0-shaped sealing ring segment, is arranged at the end of the O-shaped sealing ring shoulder in the vicinity of the O-shaped sealing ring, the step always keeps in sealed movable connection with the O-shaped sealing ring segment when the retainer is pushed to move in reverse direction of pipe entry.

In a class of this embodiment, the gap between the O-shaped sealing ring shoulder and the locking cap allows the O-shaped sealing ring to push the grab ring against the locking cap through the retainer when the pipe is injected with liquid and gets pressurized to expand to compress the 0-shaped sealing ring to expand axially.

In a class of this embodiment, the gap between the 0-shaped sealing ring shoulder and the retainer is no narrower than the axial width of the O-shaped sealing ring that is compressed when the pipe passes through the 0-shaped sealing ring.

In a class of this embodiment, the internal diameter of the teeth in initial state is smaller than the external diameter of the pipe, the internal diameter of the 0-shaped sealing ring is smaller than the external diameter of the pipe, and the internal diameter of the demounting ring is larger than the external diameter of the pipe.

In a class of this embodiment, the retainer is annular, and contains a ramp that coordinates with the teeth.

In a class of this embodiment, the socket further comprises: a locking cap shoulder, arranged on the internal wall of the socket body, between the grab ring and the locking cap, for stopping the locking cap from moving in the direction of pipe entry; a convex part, arranged on the external wall of the demounting ring for working with the locking cap to prevent the demounting ring from escaping from the socket.

In a class of this embodiment, the demounting ring contains a sharp angle at the end of the demount ring close to the grab ring

Advantages of the invention comprise:

1. the socket comprises a socket body, comprising in the direction of pipe entry: grab ring, retainer and O-shaped sealing ring; when pipe enters the socket, the flange arranged on the grab ring is deflected; in comparison with the grab ring with undeflected flange when a pipe enters, the grabbing force of teeth of the grab ring with deflected flange acting on the pipe is smaller than that of grab ring with undeflected flange, so that this deflection of flange allows ease of the pipe entry. When the pipe is injected with liquid and gets pressurized to expand, the O-shaped sealing ring is compressed to expand axially, then the O-shaped sealing ring pushes the retainer, so as to push the grab ring to move in reverse direction of pipe entry, and try to make the flange recover from deflection with the help of pushing of the retainer, then the grabbing force of teeth of grab ring acting on the external wall of pipe may increase, which locks the pipe in the socket and ensures sealing of the socket and holding of the pipe connection.

2. the socket body comprises an O-shaped sealing ring segment arranged between the O-shaped sealing ring shoulder and the retainer shoulder, a step in sealed movable connection with the O-shaped sealing ring segment, is arranged at the end of the O-shaped sealing ring shoulder close to the O-shaped sealing ring; , the a step keeps in sealed movable connection with the O-shaped sealing ring segment when the retainer is pushed to move in reverse direction of pipe entry. This design can effectively ensure sealing of the socket when the O-shaped sealing ring pushes the retainer to move in reverse direction of pipe entry.

3. The gap between the O-shaped sealing ring shoulder and the locking cap allows the O-shaped sealing ring to push the grab ring against the locking cap through the retainer when the pipe is injected with liquid and gets pressurized to expand, which compresses the O-shaped sealing ring to expand axially. This design increases grabbing force of the teeth acting on the external wall of the pipe when the grab ring is pushed against the locking cap, preventing the pipe from escaping from the socket, so as to improve holding of the pipe connection.

4. If the gap between the O-shaped sealing ring shoulder and the retainer is wider than the axial width of the O-shaped sealing ring that is compressed when the pipe enters the socket, the O-shaped sealing ring will not contact the retainer so as not to push the grab ring to move in reserve direction of pipe entry when the O-shaped sealing ring is compressed and expands axially, and this will not increase the grabbing force of the teeth of the grab ring acting on the external wall of the pipe entering, so that the compression of the O-shaped sealing ring may not restrict the pipe entry. If the gap between the O-shaped sealing ring shoulder and the retainer is as wide as the axial width of the O-shaped sealing ring that is compressed when the pipe enters the socket, the O-shaped sealing ring will just contact the retainer but not give any pressure on the retainer, so as not to push the grab ring to move in reserve direction of pipe entry when the O-shaped sealing ring is compressed and expands axially, and this will not increase the grabbing force of the teeth of the grab ring acting on the external wall of the pipe entering, so that the compression of the O-shaped sealing ring may not restrict the pipe entry, in addition, this calculated gap between the O-shaped sealing ring shoulder and the retainer will allow the pressure of the compressed O-shaped sealing ring due to axial expansion to completely act on the retainer when the inserted pipe is injected with liquid and gets pressurized to expand, so as to push the grab ring to move in reverse direction of pipe entry.

5. As the internal diameter of the teeth in initial state is smaller than the external diameter of the pipe, the teeth of the grab ring can grab on the external wall of the pipe. As the internal diameter of the O-shaped sealing ring is smaller than the external diameter of the pipe, the O-shaped sealing ring can form a sealed connection with the external wall of the pipe, and as the internal diameter of the demounting ring is larger than the external diameter of the pipe, a sufficient clearance forms between the demounting ring and the pipe allowing an unrestricted entry of the pipe.

6. The retainer is annular, and contains a ramp that coordinates with the teeth. This allows the teeth of the grab ring to flex when pushed by the pipe being inserted.

7. The demounting ring containing a sharp angle at the end of the demount ring close to the O-shaped sealing ring ensures least contact with the teeth of the grab ring.

### BRIEF DESCRIPTION OF THE DRAWINGS

Detailed description will be given below in conjunction with accompanying drawings:

FIG. 1 illustrates a pipe connector without a step in an initial state;

FIG. 2 illustrates a pipe connector without a step after the entry of pipe;

FIG. 3 illustrates a pipe connector without a step after the pipe is injected with liquid and gets pressurized to expand;

FIG. 4 illustrates a pipe connector with a step in an initial state;

FIG 5 illustrates a pipe connector with a step after the entry of pipe;

FIG 6 illustrates a preferred embodiment for a pipe connector; and

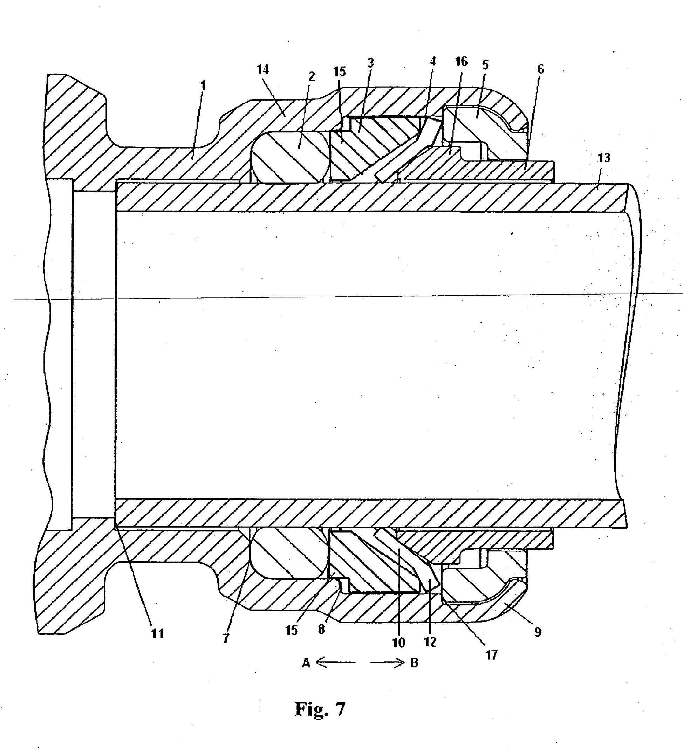

FIG 7 illustrates a preferred embodiment for a pipe connector after the pipe is injected with liquid and gets pressurized to expand;
In the drawings, the following reference numbers are used:
1-socket body; 2-O-shaped sealing ring; 3-retainer; 4-grab ring; 5-locking cap; 6-demounting ring; 7-O-shaped sealing ring shoulder; 8-retainer shoulder; 9-locking cap stop member; 10-tooth; 11-pipe stop member; 12-flange; 13-pipe; 14-O-shaped sealing ring segment; 15-step; 16-convex part; 17-locking cap shoulder

### DETAILED DESCRIPTION OF THE EMBODIMENTS

Embodiment 1

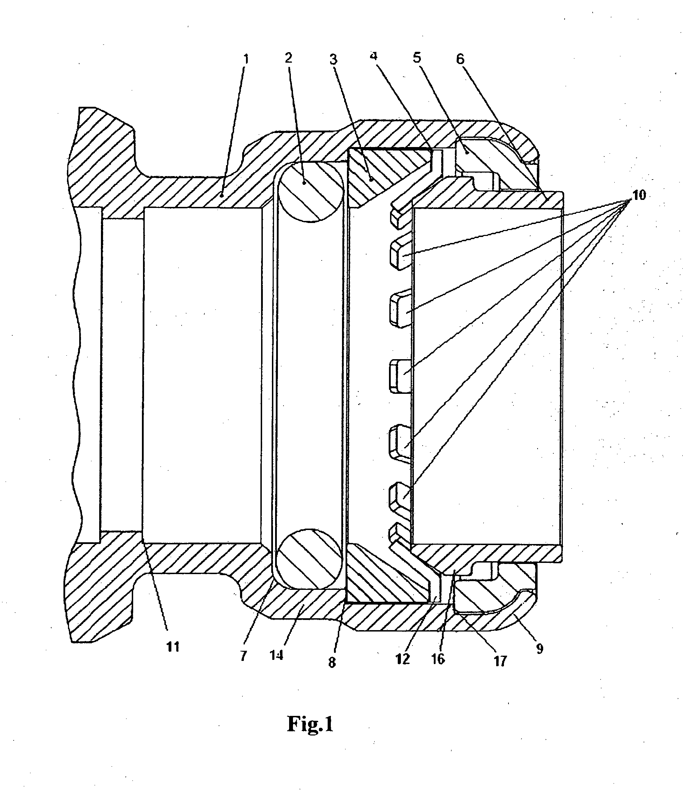

Referring to FIG 1, a pipe connector comprises a socket body 1. The socket body I comprises, in the direction of pipe entry: a locking cap 5 for preventing the components such as demounting ring 6, grab ring 4, retainer 3 and O-shaped sealing ring 2 therein from escaping, a locking cap stop member 9 arranged at the end of the socket where the pipe 13 enters, for preventing the locking cap 5 from escaping; a demounting ring 6 for unlocking the pipe 13; a grab ring 4, comprising a flange 12 and a plurality of teeth 10 set on the flange and fixed to the external wall of the pipe 13; a retainer 3, in moveable connection with the internal wall of the socket body 1, for stopping the grab ring 4 from moving in the direction of pipe entry; a retainer shoulder 8 arranged on the internal wall of the socket body 1 for stopping the retainer 3 from moving in the direction of pipe entry; the arrangement of the retainer shoulder 8 and the and the locking cap 5 allows free axial movement of the grab ring 4 and the retainer 3 therebetween; an O-shaped sealing ring 2 for forming a sealed connection with the external wall of the pipe 13; an O-shaped sealing ring shoulder 7, arranged on the internal wall of the socket body 1, for stopping the O-shaped sealing ring 2 from moving in the direction of pipe entry; a pipe stop member 11, arranged on the internal wall of the socket body 1, for stopping the pipe 13 from moving in the direction of pipe entry;

The gap between the O-shaped sealing ring shoulder 7 and the locking cap 5 allows a designed movement of the O-shaped sealing ring 2, retainer 3 and grab ring 4 and also allows the O-shaped sealing ring 2 to push the grab ring 4 against the locking cap 5 through the retainer 3, when the pipe is injected with liquid and gets pressurized to expand so as to press the O-shaped sealing ring 2 to expand axially.

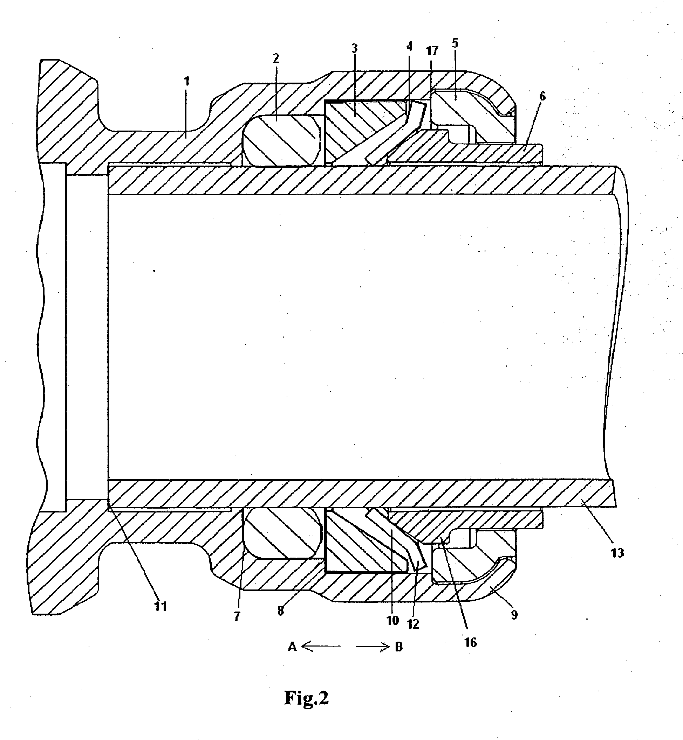

Referring to FIG 2, the gap between the O-shaped sealing ring shoulder 7 and the retainer 3 is wider than the axial width of the O-shaped sealing ring 2 that is compressed when the pipe 13 enters the socket and passes through the O-shaped sealing ring 2. It allows the free compression of the O-shaped sealing ring 2, and the O-shaped sealing ring 2 is separated from the retainer 3.

The internal diameter of the teeth 10 in initial state is smaller than the external diameter of the pipe 13, the internal diameter of the O-shaped sealing ring 2 is smaller than the external diameter of the pipe 13, and the internal diameter of the demounting ring 6 is larger than the external diameter of the pipe 13.

The retainer 3 is annular, and contains a ramp that coordinates with the teeth 10.

The socket further comprises a locking cap shoulder 17, arranged on the internal wall of the socket body 1, between the grab ring 4 and the locking cap 5, for stopping the locking cap 5 from moving in the direction of pipe entry; a convex part 16, arranged on the external wall of the demounting ring for working with the locking cap (5) to prevent the demounting ring 6 from escaping from the socket.

The demounting ring 6 contains a sharp angle at the end of the demount ring 6 close to the O-shaped sealing ring 4. When the pipe 13 enters the socket, it initially passes through the demounting ring 6; then with the entry of the pipe 13, the external wall of the pipe 13 gets to contact the teeth 10 of the grab ring 4, and push the teeth 10 so as to make the flange 12 of the grab ring 4 deflected. When the pipe enters, force acting on the teeth 10 pushes the retainer towards the shoulder. After that the pipe 13 passes through the grab ring 4; with further entry of the pipe 13, it passes through the retainer 3 and the O-shaped sealing ring, then reaches the pipe stop member 11;, the deflection of flange is illustrated in FIG. 1 that the external part of the flange 12 moves in reverse direction of pipe entry (Direction B), and the internal part of the flange 12 moves in the direction of pipe entry (Direction A).

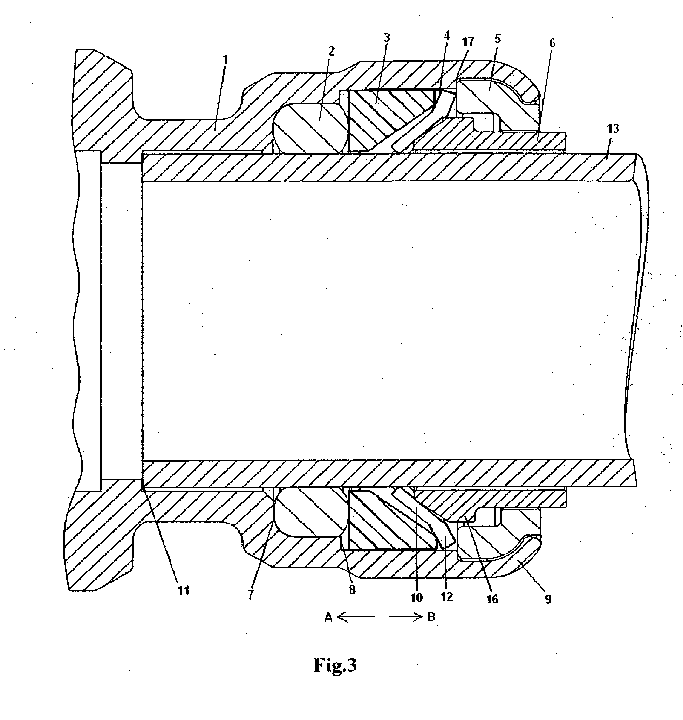

Referring to FIG 3, when the pipe 13 is injected with liquid and gets pressurized to expand, the pipe 13 will be expanded; with the expansion of the pipe 13, the O-shaped sealing ring 2 is pressured by the pipe 13 and expands axially, then the O-shaped sealing ring 2 pushes the retainer 3, so as to push the grab ring 4 to move in reverse direction of pipe entry until it is pushed against the locking cap; at this moment, the deflected flange begins to get recovered from deflection and try to flatten itself to an initial state, and this may allow the increase of grabbing force acting on the external wall of the pipe 13, thus locking the pipe 13 in the socket.

In order to take the pipe 13 out of the socket, the demounting ring 6 is pushed in the direction of pipe entry, and then the end of the demounting ring 6 close to the grab ring pushes the teeth to separate them from the external wall of the pipe 13, so that the pipe 13 is unlocked and can be taken out of the socket.

The pipe 13 preferably can be PEX pipe.

The socket comprises a socket body, comprising in the direction of pipe entry: grab ring, retainer and O-shaped sealing ring; , when pipe enters the socket, the flange arranged on the grab ring is deflected; in comparison with the grab ring with no deflection with its flange when a pipe enters, the grabbing force of teeth of the grab ring with deflected flange acting on the pipe is smaller than that of grab ring with undeflected flange, so that this deflection of flange allows ease of the pipe entry. When the pipe is injected with liquid and gets pressurized to expand, the O-shaped sealing ring is pressured to expand axially, then the O-shaped sealing ring pushes the retainer, so as to push the grab ring to move in reverse direction of pipe entry, and make the flange recover from deflection with the help of pushing of the retainer, then the grabbing force of teeth of grab ring acting on the external wall of pipe may increase, which locks the pipe in the socket and ensures sealing of the socket and holding of the pipe connection.

The gap between the O-shaped sealing ring shoulder and the locking cap allows the O-shaped sealing ring to push the grab ring against the locking cap through the retainer when the pipe is injected with liquid and gets pressurized to expand, which presses the O-shaped sealing ring to expand axially. This design increases grabbing force of the teeth acting on the external wall of the pipe when the grab ring is pushed against the locking cap, preventing the pipe from escaping from the socket, so as to improve holding of the pipe connection.

The gap between the O-shaped sealing ring shoulder and the retainer is wider than the axial width of the O-shaped sealing ring that is compressed when the pipe enters the socket, the O-shaped sealing ring will not contact the retainer so as not to push the grab ring to move in reserve direction of pipe entry when the O-shaped sealing ring is compressed and expands axially, and this will not increase the grabbing force of the teeth of the grab ring acting on the external wall of the pipe entering, so that the compression of the O-shaped sealing ring may not restrict the pipe entry.

As the internal diameter of the teeth in initial state is smaller than the external diameter of the pipe, the teeth of the grab ring can grab on the external wall of the pipe. As the internal diameter of the O-shaped sealing ring is smaller than the external diameter of the pipe, the O-shaped sealing ring can form a sealed connection with the external wall of the pipe, and as the internal diameter of the demounting ring is larger than the external diameter of the pipe, a sufficient clearance forms between the demounting ring and the pipe allowing an unrestricted entry of the pipe.

The retainer is annular, and contains a ramp that coordinates with the teeth. This allows the teeth of the grab ring to flex when pushed by the pipe being inserted.

The demounting ring containing a sharp angle at the end of the demount ring close to the O-shaped sealing ring ensures least contact with the teeth of the grab ring.

Embodiment 2

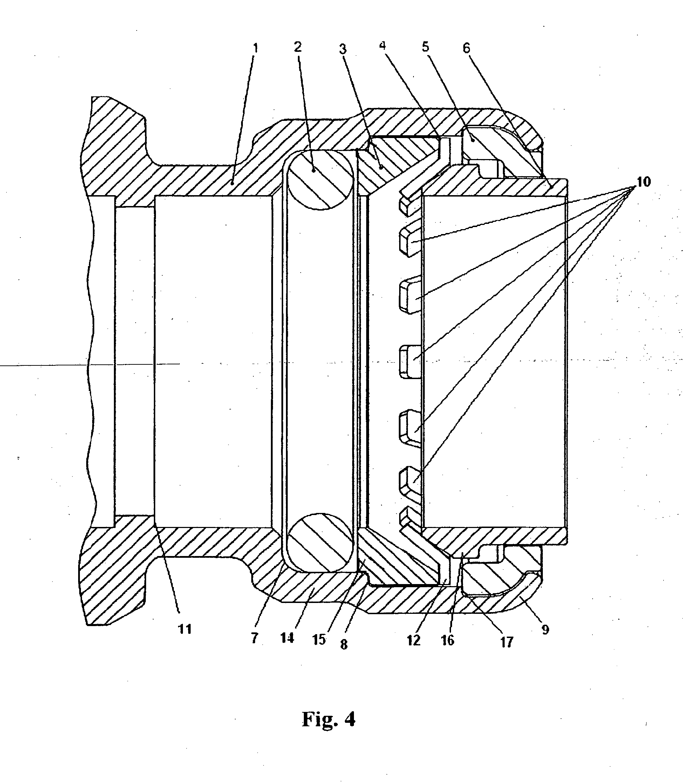

Referring to FIG 4, a pipe connector comprises a socket body 1 in which in the direction of pipe entry, configuring in sequence a locking cap 5 for preventing the components such as demounting ring 6, grab ring 4, retainer 3 and O-shaped sealing ring 2 therein from escaping, a locking cap stop member 9 arranged at the end of the socket where the pipe 13 enters, for preventing the locking cap 5 from escaping; a demounting ring 6 for unlocking the pipe 13; a grab ring 4, comprising a flange 12 and a plurality of teeth 10 arranged on the flange and fixed to the external wall of the pipe 13; a retainer 3, in moveable connection with the internal wall of the socket body 1, for stopping the grab ring 4 from moving in the direction of pipe entry; a retainer shoulder 8 arranged on the internal wall of the socket body 1 for stopping the retainer 3 from moving in the direction of pipe entry; the arrangement of the retainer shoulder 8 and the and the locking cap 5 allows free axial movement of the grab ring 4 and the retainer 3 therebetween; an O-shaped sealing ring 2 for forming a sealed connection with the external wall of the pipe 13; an O-shaped sealing ring shoulder 7, arranged on the internal wall of the socket body 1, for stopping the O-shaped sealing ring 2 from moving in the direction of pipe entry; a pipe stop member 11, arranged on the internal wall of the socket body 1, for stopping the pipe 13 from moving in the direction of pipe entry;

The socket also comprises an O-shaped sealing ring segment 14 arranged between the O-shaped sealing ring shoulder 7 and retainer shoulder 8, a step 15 in sealed movable connection with the O-shaped sealing ring segment 14, is arranged at the end of the O-shaped sealing ring shoulder 7 close to the O-shaped sealing ring 2; , the step 15 always keeps in sealed movable connection with the O-shaped sealing ring segment 14 when the retainer is pushed to move in reverse direction of pipe entry.

The gap between the O-shaped sealing ring shoulder 7 and the locking cap 5 allows a designed movement of the O-shaped sealing ring 2, retainer 3 and grab ring 4, and also allows the O-shaped sealing ring 2 to push the grab ring 4 against the locking cap 5 through the retainer 3 when the pipe is injected with liquid and gets pressurized to expand, which presses the O-shaped sealing ring 2 to expand axially.

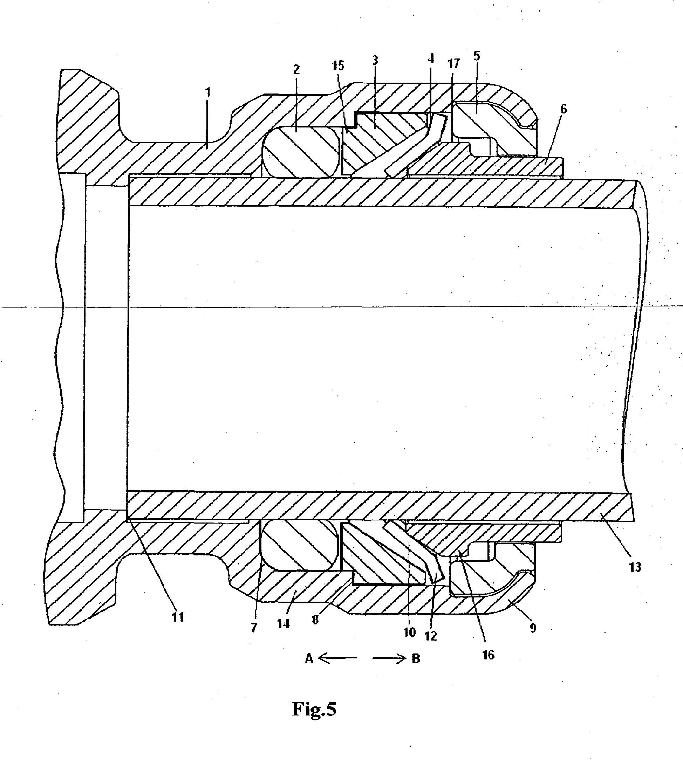

Referring to FIG 5, the gap between the O-shaped sealing ring shoulder 7 and the retainer 3 is wider than the axial width of the O-shaped sealing ring 2 that is compressed when the pipe 13 enters the socket and passes through the O-shaped sealing ring 2.

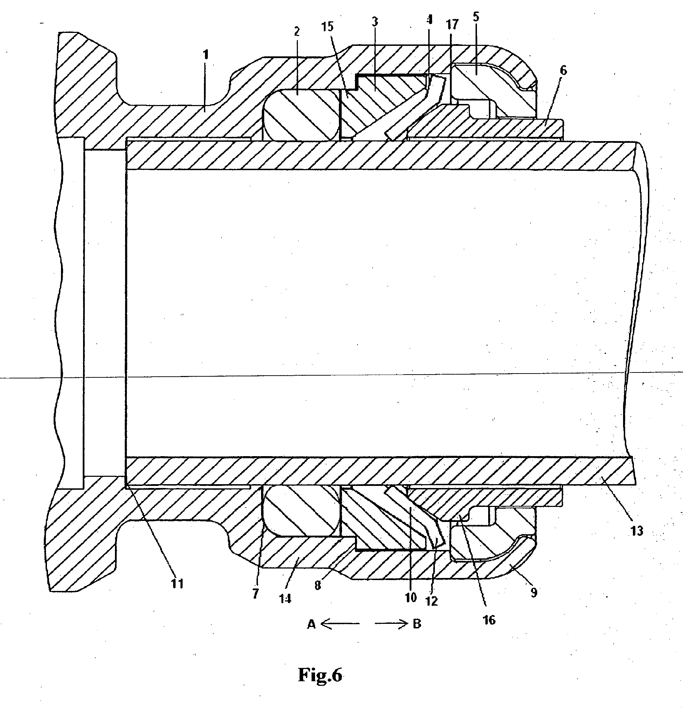

However, there is a preferred design is shown in FIG 6 that the gap between the O-shaped sealing ring shoulder 7 and the retainer 3 is as wide as the axial width of the O-shaped sealing ring 2 that is compressed when the pipe 13 enters the socket and passes through the O-shaped sealing ring 2. It allows the free compression of the O-shaped sealing ring 2.

The internal diameter of the teeth 10 in initial state is smaller than the external diameter of the pipe 13, the internal diameter of the O-shaped sealing ring 2 is smaller than the external diameter of the pipe 13, and the internal diameter of the demounting ring 6 is larger than the external diameter of the pipe 13.

The retainer 3 is annular, and contains a ramp that coordinates with the teeth 10.

The socket further comprises a locking cap shoulder 17, arranged on the internal wall of the socket body 1, between the grab ring 4 and the locking cap 5, for stopping the locking cap 5 from moving in the direction of pipe entry; a convex part 16, arranged on the external wall of the demounting ring for working with the locking cap 5 to prevent the demounting ring 6 from escaping from the socket.

The demounting ring 6 contains a sharp angle at the end of the demount ring 6 close to the O-shaped sealing ring 4. When pipe 13 enters the socket, it initially passes through the demounting ring 6;then with the entry of the pipe 13, the external wall of the pipe 13 gets to contact the teeth 10 of the grab ring 4, and push the teeth 10 so as to make the flange 12 of the grab ring 4 deflected. When the pipe enters, the force acting on the teeth 10 pushes the retainer towards the shoulder. After that the pipe 13 passes through the grab ring 4; with further entry of the pipe 13, it passes through the retainer 3 and the O-shaped sealing ring, then reaches the pipe stop member 11; the deflection of flange is illustrated in FIG. 1 that the external part of the flange 12 moves in reverse direction of pipe entry (Direction B), and the internal part of the flange 12 moves in the direction of pipe entry (Direction A).

Referring to FIG 3, when the pipe 13 is injected with liquid and gets pressurized to expand, the pipe 13 will be expanded; with the expansion of the pipe 13, the O-shaped sealing ring 2 is pressured by the pipe 13 and expands axially, then the O-shaped sealing ring 2 pushes the retainer 3, so as to push the grab ring 4 to move in reverse direction of pipe entry until it is pushed against the locking cap; at this moment, the deflected flange begins to get recovered from deflection and try to flatten itself to an initial state, and this may allow the increase of grabbing force acting on the external wall of the pipe 13, thus locking the pipe 13 in the socket.

In order to take the pipe 13 out of the socket, the demounting ring 6 is pushed in the direction of pipe entry, and then the end of the demounting ring 6 close to the grab ring pushes the teeth to separate them from the external wall of the pipe 13, so that the pipe 13 can be taken out of the socket.

The pipe 13 preferably can be PEX pipe.

The pipe connector mentioned in above embodiment comprises a socket body, comprising in the direction of pipe entry: grab ring, retainer and O-shaped sealing ring; , when pipe enters the socket, the flange arranged on the grab ring is deflected; in comparison with the grab ring with no deflection with its flange when a pipe enters, the grabbing force of teeth of the grab ring with deflected flange acting on the pipe is smaller than that of grab ring with undeflected flange, so that this deflection of flange allows ease of the pipe entry. When the pipe is injected with liquid and gets pressurized to expand, the O-shaped sealing ring is pressured to expand axially, then the O-shaped sealing ring pushes the retainer, so as to push the grab ring to move in reverse direction of pipe entry, and make the flange recover from deflection with the help of pushing of the retainer, then the grabbing force of teeth of grab ring acting on the external wall of pipe may increase, which locks the pipe in the socket and ensures sealing of the socket and holding of the pipe connection.

The socket body comprises an O-shaped sealing ring segment arranged between the O-shaped sealing ring shoulder and the retainer shoulder, a step in sealed movable connection with the O-shaped sealing ring segment, is arranged at the end of the O-shaped sealing ring shoulder close to the O-shaped sealing ring; , the a step keeps in sealed movable connection with the O-shaped sealing ring segment when the retainer is pushed to move in reverse direction of pipe entry. This design can effectively ensure sealing of the socket when the O-shaped sealing ring pushes the retainer to move in reverse direction of pipe entry.

The gap between the O-shaped sealing ring shoulder and the locking cap allows the O-shaped sealing ring to push the grab ring against the locking cap through the retainer when the pipe is injected with liquid and gets pressurized to expand, which presses the O-shaped sealing ring to expand axially. This design increases grabbing force of the teeth acting on the external wall of the pipe when the grab ring is pushed against the locking cap, preventing the pipe from escaping from the socket, so as to improve holding of the pipe connection.

The gap between the O-shaped sealing ring shoulder and the retainer is as wide as the axial width of the O-shaped sealing ring that is compressed when the pipe enters the socket, the O-shaped sealing ring will just contact the retainer but not give any pressure on the retainer, so as not to push the grab ring to move in reserve direction of pipe entry when the O-shaped sealing ring is compressed and expands axially, and this will not increase the grabbing force of the teeth of the grab ring acting on the external wall of the pipe entering, so that the compression of the O-shaped sealing ring may not restrict the pipe entry, in addition, this calculated gap between the O-shaped sealing ring shoulder and the retainer will allow the pressure of the compressed O-shaped sealing ring due to axial expansion to completely act on the retainer when the inserted pipe is injected with liquid and gets pressurized to expand, so as to push the grab ring to move in reverse direction of pipe entry.

As the internal diameter of the teeth in initial state is smaller than the external diameter of the pipe, the teeth of the grab ring can grab on the external wall of the pipe.
As the internal diameter of the O-shaped sealing ring is smaller than the external diameter of the pipe, the O-shaped sealing ring can form a sealed connection with the external wall of the pipe, and as the internal diameter of the demounting ring is larger than the external diameter of the pipe, a sufficient clearance forms between the demounting ring and the pipe allowing an unrestricted entry of the pipe.

The retainer is annular, and contains a ramp that coordinates with the teeth. This allows the teeth of the grab ring to flex when pushed by the pipe being inserted.

The demounting ring containing a sharp angle at the end of the demount ring close to the O-shaped sealing ring ensures least contact with the teeth of the grab ring.

While particular embodiments of the invention have been shown and described, it will be obvious to those skilled in the art that changes and modifications may be made without departing from the invention and therefore, the aim in the appended claims is to cover all such changes and modifications as fall within the scope of the invention.

## Claims

1. A pipe connector, comprising: a socket body (1), comprising in the direction of pipe entry:
a locking cap (5) for preventing the components in said socket from escaping,
a locking cap stop member (9) arranged at the end of said socket body (1) where said pipe (13) enters, for preventing said locking cap (5) from escaping;
a demounting ring (6) for unlocking said pipe (13);
a grab ring (4), comprising a flange (12), and a plurality of teeth (10) arranged on said flange and fixed to the external wall of said pipe (13) ;
a retainer (3), in moveable connection with the internal wall of said socket body (1), for stopping said grab ring (4) from moving in the direction of pipe entry;
a retainer shoulder (8) arranged on the internal wall of said socket body (1) for stopping said retainer (3) from moving in the direction of pipe entry; an 0-shaped sealing ring (2) for forming a sealed connection with the external wall of said pipe (13) ;
an O-shaped sealing ring shoulder (7), arranged on the internal wall of said socket body (1), for stopping said 0-shaped sealing ring (2) from moving in the direction of pipe entry;
a pipe stop member(11), arranged on the internal wall of said socket body (1), for stopping said pipe (13) from moving in the direction of pipe entry;
the arrangement of said retainer shoulder (8) and said locking cap (5) allows free axial movement of said grab ring (4) and said retainer (3) therebetween;
**characterized in that** said flange (12) of said grab ring (4) is deflectable upon entry of a pipe (13) in said socket, and said O-shaped sealing ring (2) is compressible and axially expendable upon directing liquid into said pipe and pressurizing said pipe, thus pushing said retainer (3) so that said grab ring (4) is pushed to move in reverse direction of pipe entry, which forces said flange to recover from deflection, thus locking said pipe (13).

2. The pipe connector of claim 1, further comprising an O-shaped sealing ring segment (14) arranged between said 0-shaped sealing ring shoulder (7) and said retainer shoulder (8).

3. The pipe connector of claim 2, wherein
a step (15) in sealed movable connection with said 0-shaped sealing ring segment (14), is arranged at the end of said O-shaped sealing ring shoulder (7) in the vicinity of said O-shaped sealing ring (2); and
said step (15) always keeps in sealed movable connection with said 0-shaped sealing ring segment (14) when said retainer is pushed to move in reverse direction of pipe entry.

4. The pipe connector of claim 3, wherein the gap between said 0-shaped sealing ring shoulder (7) and the locking cap (5) allows said O-shaped sealing ring (2) to push said grab ring (4) against the locking cap (5) through said retainer (3) when said pipe is injected with liquid and gets pressurized to expand to compress said O-shaped sealing ring (2) to expand axially.

5. The pipe connector of claim 4, wherein the gap between said 0-shaped sealing ring shoulder (7) and said retainer (3) is no narrower than the axial width of said 0-shaped sealing ring (2) that is compressed when said pipe (13)passes through said O-shaped sealing ring (2).

6. The pipe connector of claim 5, wherein the internal diameter of said teeth (10) in initial state is smaller than the external diameter of said pipe (13), the internal diameter of said 0-shaped sealing ring (2) is smaller than the external diameter of said pipe (13), and the internal diameter of said demounting ring (6) is larger than the external diameter of said pipe (13).

7. The pipe connector of claim 6, wherein said retainer (3) is annular, and contains a ramp that coordinates with said teeth (10).

8. The pipe connector of claim 7, further comprising
a locking cap shoulder (17), arranged on the internal wall of said socket body (1), between said grab ring (4) and said locking cap (5), for stopping said locking cap (5) from moving in the direction of pipe entry.; and
a convex part (16), arranged on the external wall of said demounting ring for working with said locking cap (5) to prevent said demounting ring (6) from escaping from said socket.

9. The pipe connector of claim 8, wherein said demounting ring (6) contains a sharp angle at the end of said demount ring (6) close to said grab ring (4).

## Patentansprüche

1. Rohrverbinder, der umfasst: einen Buchsenkörper (1), der in der Richtung eines Rohreintritts umfasst:
eine Verriegelungskappe (5), um die Komponenten in der Buchse am Austreten zu hindern,
eine Verriegelungskappenanschlagkomponente (9), die an dem Ende des Buchsenkörpers (1) angeordnet ist, an dem das Rohr (13) eintritt, um die Verriegelungskappe (5) am Austreten zu hindern;
einen Demontagering (6) zum Entriegeln des Rohrs (13);
einen Greifring (4), der einen Flansch (12) und eine Vielzahl an Zähnen (10) umfasst, die an dem Flansch angeordnet und an der äußeren Wand des Rohrs (13) befestigt sind,
einen Halter (3), der bewegbar mit der inneren Wand des Buchsenkörpers (1) verbunden ist, um den Greifring (4) von einem Bewegen in die Richtung des Rohreintritts abzuhalten;
eine Halteschulter (8), die an der inneren Wand des Buchsenkörpers (1) angeordnet ist, um den Halter (3) von einem Bewegen in die Richtung des Rohreintritts abzuhalten; einen 0-förmigen Dichtungsring (2) zum Bilden einer abgedichteten Verbindung mit der äußeren Wand des Rohrs (13);
eine O-förmige Dichtungsringschulter (7), die an der inneren Wand des Buchsenkörpers (1) angeordnet ist, um den O-förmigen Dichtungsring (2) von einem Bewegen in die Richtung des Rohreintritts abzuhalten;
eine Rohranschlagkomponente (11), die an der inneren Wand des Buchsenkörpers (1) angeordnet ist, um das Rohr (13) von einem Bewegen in die Richtung des Rohreintritts abzuhalten;
wobei die Anordnung der Halteschulter (8) und der Verriegelungskappe (5) dazwischen ein freies axiales Bewegen des Greifrings (4) und des Halters (3) ermöglicht;
**dadurch gekennzeichnet, dass** der Flansch (12) des Greifrings (4) bei einem Eintritt eines Rohrs (13) in die Buchse auslenkbar ist, und der O-förmige Dichtungsring (2) bei einem Leiten von Flüssigkeit in das Rohr und einem Druckbeaufschlagen des Rohrs kompressibel und axial ausdehnbar ist, und dadurch den Halter (3) derart anschiebt, dass der Greifring (4) angeschoben wird, um sich in eine dem Rohreintritt entgegengesetzte Richtung zu bewegen, was den Flansch dazu zwingt, das Auslenken zurückzubilden, und dadurch das Rohr (13) zu verriegeln.

2. Rohrverbinder nach Anspruch 1, der des Weiteren einen O-förmigen Dichtungsringabschnitt (14) umfasst, der zwischen der O-förmigen Dichtungsringschulter (7) und der Halteschulter (8) angeordnet ist.

3. Rohrverbinder nach Anspruch 2, wobei
eine Stufe (15), die in abgedichteter bewegbarer Verbindung mit dem 0-förmigen Dichtungsringabschnitt (14) an dem Ende der O-förmigen Dichtungsringschulter (7) dem 0-förmigen Dichtungsring (2) benachbart angeordnet ist; und
die Stufe (15) jederzeit in abgedichteter bewegbarer Verbindung mit dem 0-förmigen Dichtungsringabschnitt (14) bleibt, wenn der Halter angeschoben wird, um sich in die dem Rohreintritt entgegengesetzte Richtung zu bewegen.

4. Rohrverbinder nach Anspruch 3, wobei der Abstand zwischen der O-förmigen Dichtungsringschulter (7) und der Verriegelungskappe (5) dem O-förmigen Dichtungsring (2) ermöglicht, den Greifring (4) mittels des Halters (3) gegen die Verriegelungskappe (5) zu schieben, wenn Flüssigkeit in das Rohr eingebracht wird und das Rohr unter Druck gesetzt wird, um sich zum Komprimieren des O-förmigen Dichtungsrings (2) auszudehnen, so dass dieser sich axial ausdehnt.

5. Rohrverbinder nach Anspruch 4, wobei der Abstand zwischen der O-förmigen Dichtungsringschulter (7) und dem Halter (3) nicht schmaler ist als die axiale Breite des O-förmigen Dichtungsrings (2), der komprimiert ist, wenn das Rohr (13) durch den 0-förmigen Dichtungsring (2) tritt.

6. Rohrverbinder nach Anspruch 5, wobei der innere Durchmesser der Zähne (10) in einem Ausgangszustand kleiner ist als der äußere Durchmesser des Rohrs (13), wobei der innere Durchmesser des O-förmigen Dichtungsrings (2) kleiner ist als der äußere Durchmesser des Rohrs (13), und der innere Durchmesser des Demontagerings (6) größer ist als der äußere Durchmesser des Rohrs (13).

7. Rohrverbinder nach Anspruch 6, wobei der Halter (6) ringförmig ist und eine Rampe aufweist, die auf die Zähne (10) abgestimmt ist.

8. Rohrverbinder nach Anspruch 7, der des Weiteren umfasst:
eine Verriegelungskappenschulter (17), die an der inneren Wand des Buchsenkörpers (1) zwischen dem Greifring (4) und der Verriegelungskappe (5) angeordnet ist, um die Verriegelungskappe (5) von einem Bewegen in die Richtung des Rohreintritts abzuhalten; und
einen konvexen Abschnitt (16), der an der äußeren Wand des Demontagerings angeordnet ist, um mit der Verriegelungskappe (5) zusammenzuwirken, um den Demontagering (6) an einem Austreten aus der Buchse zu hindern.

9. Rohrverbinder nach Anspruch 8, wobei der Demontagering (6) an dem Ende des Demontagerings (6) nahe des Greifrings (4) einen spitzen Winkel aufweist.

## Revendications

1. Connecteur de tuyaux, comprenant : un corps (1) de prise, comprenant dans le sens d'entrée de tuyau :
une coiffe (5) de verrouillage pour empêcher les composants dans ladite prise d'échapper,
un élément (9) d'arrêt de coiffe de verrouillage agencé à l'extrémité dudit corps (1) de prise où ledit tuyau (13) pénètre, pour empêcher ladite coiffe (5) de verrouillage d'échapper ;
une bague (6) de démontage pour déverrouiller ledit tuyau (13) ;
une bague (4) de préhension, comprenant une bride (12), et une pluralité de dents (10) agencées sur ladite bride et fixée sur la paroi externe dudit tuyau (13) ;
un élément (3) de retenue, en connexion mobile avec la paroi interne dudit corps (1) de prise, pour stopper le mouvement de ladite bague (4) de préhension dans le sens d'entrée de tuyau ;
un épaulement (8) d'élément de retenue agencé sur la paroi interne dudit corps (1) de prise pour stopper le mouvement dudit élément (3) de retenue dans le sens d'entrée de tuyau ; une bague (2) d'étanchéité torique pour former une connexion étanche avec la paroi externe dudit tuyau (13) ;
un épaulement (7) de bague d'étanchéité torique, agencé sur la paroi interne dudit corps (1) de prise, pour stopper le mouvement de ladite bague (2) d'étanchéité torique dans le sens d'entrée de tuyau ;
un élément (11) d'arrêt de tuyau, agencé sur la paroi interne dudit corps (1) de prise, pour stopper le mouvement dudit tuyau (13) dans le sens d'entrée de tuyau ;
l'agencement dudit épaulement (8) d'élément de retenue et de ladite coiffe (5) de verrouillage permet un mouvement axial libre de ladite bague (4) de préhension et dudit élément (3) de retenue entre ceux-ci ;
**caractérisé en ce que** ladite bride (12) de ladite bague (4) de préhension peut être déviée lors de l'entrée d'un tuyau (13) dans ladite prise, et ladite bague (2) d'étanchéité torique peut être compressée et axialement dilatée lors de l'entrée de liquide dans ledit tuyau et de la mise sous pression dudit tuyau, poussant ainsi ledit élément (3) de retenue de telle sorte que ladite bague (4) de préhension est poussée de façon à se déplacer dans le sens inverse d'entrée de tuyau, ce qui force ladite bride à se redresser après la déviation, verrouillant ainsi ledit tuyau (13).

2. Connecteur de tuyaux selon la revendication 1, comprenant en outre un segment (14) de bague d'étanchéité torique agencé entre ledit épaulement (7) de bague d'étanchéité torique et ledit épaulement (8) d'élément de retenue.

3. Connecteur de tuyaux selon la revendication 2, dans lequel
une marche (15) en connexion mobile étanche avec ledit segment (14) de bague d'étanchéité torique est agencée à l'extrémité dudit épaulement (7) de bague d'étanchéité torique à proximité de ladite bague (2) d'étanchéité torique ; et
ladite marche (15) se maintient toujours en connexion mobile étanche avec ledit segment (14) de bague d'étanchéité torique lorsque ledit élément de retenue est poussé pour se déplacer dans le sens inverse d'entrée de tuyau.

4. Connecteur de tuyaux selon la revendication 3, dans lequel l'espace entre ledit épaulement (7) de bague d'étanchéité torique et la coiffe (5) de verrouillage permet que ladite bague (2) d'étanchéité torique pousse ladite bague (4) de préhension contre la coiffe (5) de verrouillage par l'intermédiaire dudit élément (3) de retenue lorsque ledit tuyau est injecté avec du liquide et est mis sous pression pour se dilater afin de compresser ladite bague (2) d'étanchéité torique pour qu'elle se dilate axialement.

5. Connecteur de tuyaux selon la revendication 4, dans lequel l'espace entre ledit épaulement (7) de bague d'étanchéité torique et ledit élément (3) de retenue n'est pas plus étroit que la largeur axiale de ladite bague (2) d'étanchéité torique qui est compressée lorsque ledit tuyau (13) passe à travers ladite bague (2) d'étanchéité torique.

6. Connecteur de tuyaux selon la revendication 5, dans lequel le diamètre interne desdites dents (10) à l'état initial est plus petit que le diamètre externe dudit tuyau (13), le diamètre interne de ladite bague (2) d'étanchéité torique est plus petit que le diamètre externe dudit tuyau (13), et le diamètre interne de ladite bague (6) de démontage est plus grand que le diamètre externe dudit tuyau (13).

7. Connecteur de tuyaux selon la revendication 6, dans lequel ledit élément (3) de retenue est annulaire, et contient une pente qui se coordonne avec lesdites dents (10).

8. Connecteur de tuyaux selon la revendication 7, comprenant en outre
un épaulement (17) de coiffe de verrouillage, agencé sur la paroi interne dudit corps (1) de prise, entre ladite bague (4) de préhension et ladite coiffe (5) de verrouillage, pour stopper le mouvement de ladite coiffe (5) de verrouillage dans le sens d'entrée de tuyau ; et
une partie (16) convexe, agencée sur la paroi externe de ladite bague de démontage pour travailler avec ladite coiffe (5) de verrouillage pour empêcher que ladite bague (6) de démontage n'échappe de ladite prise.

9. Connecteur de tuyaux selon la revendication 8, dans lequel ladite bague (6) de démontage contient un angle aigu à l'extrémité de ladite bague (6) de démontage à proximité de ladite bague (4) de préhension.
